# EUROPEAN PATENT APPLICATION

(11) **EP 4 656 910 A1**
(43) Date of publication of application: **03.12.2025**
(21) Application number: 24178350.5
(22) Date of filing: 28.05.2024
(51) Int. Cl.: F16H 61/16

(54) **CONTROL DEVICE FOR GEAR SELECTION IN AN ELECTRICALLY DRIVEN VEHICLE AND A METHOD FOR GEAR SELECTION CONTROL IN AN ELECTRICALLY DRIVEN VEHICLE**

(71) Applicant: VOLVO TRUCK CORPORATION, 405 08 Göteborg (SE)
(72) Inventor: WINBLAD, Hanna, 416 70 Göteborg (SE); SVÄRLING, Emma, 417 56 Göteborg (SE)
(74) Representative: Valea AB

(57) **Abstract**

The present disclosure relates to a control system (100) for gear selection of a transmission (205) for an electrically driven vehicle (1), wherein said control system (100) comprises a gear selection control device (150) and a gear selection input device (101), the gear selection input device (101) comprising a user input element (102) for selectively holding a constant gear, and wherein said control system (100) is adapted to hold a constant gear of the transmission while the user input element (102) is activated.

The disclosure also relates to a transmission arrangement, a powertrain (200), a vehicle (1) and a method.

## Description

### TECHNICAL FIELD

The disclosure relates generally to control of transmissions in electric vehicles. In particular aspects, the disclosure relates to a control device for gear selection in an electrically driven vehicle and a method for gear selection control in an electrically driven vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Electric vehicles, in particular heavy duty electric vehicles, are often equipped with a transmission. Gear selection may be performed automatically by a gear control device. Automatic gear selection may be dependent on a plurality of factors and may lead to unwanted gear changes and driver discomfort in particular driving conditions.

Thus, there is a need for an improved control device and a method for gear selection in an electric vehicle. Further, there is a need for such a device and method that improves drivability and alleviates driver discomfort due to unwanted gear ratio shifts.

### SUMMARY

According to a first aspect of the disclosure, there is provided a control system for gear selection of a transmission for an electrically driven vehicle , wherein said control system comprises a gear selection control device and a gear selection input device, the gear selection input device comprising a user input element for selectively holding a constant gear, and wherein said control system is adapted to hold a constant gear of the transmission while the user input element is activated.
The first aspect of the disclosure may seek to improve drivability and alleviate driver discomfort due to unwanted gear shifts. In particular, the first aspect of the disclosure may seek to improve drivability during vehicle direction changes, i.e. from forward to reverse or vice versa. A technical benefit may include improved control of an operator over gear shifts and thus an improved driving experience. Another technical benefit may include a reduction of power cut-offs due to fewer gear shifts.

Optionally, holding a constant gear comprises inhibiting an automatic gear ratio shift by overriding a command for an automatic gear ratio shift from the gear selection control device.
A technical benefit may include better drivability due to increased operator control, even in the case of an automatic gear shift command.

Optionally, said command for an automatic gear ratio shift is issued by the gear selection control device in dependence of one or more of: a longitudinal inclination of the vehicle, a mass of the vehicle, a power limit of the vehicle or any combination thereof.
A technical benefit may include improved drivability of a vehicle with inclination dependent gear control.

Optionally, said command for an automatic gear shift is issued in response to a travelling direction change of the vehicle from rearward to forward or vice versa.
A technical benefit may include improved drivability during a change of the travelling direction while the vehicle is longitudinally inclined, e.g. when positioned on a slope.

Optionally, the user input element is one of a push button, a lever or a touch screen.
A technical benefit may include facilitated operator input for holding a constant gear. For example, a push button, a lever or the like, may be arranged in connection or on the gear selection input device. Alternatively, a push button or the like may be arranged on the steering wheel of the vehicle. Alternatively, a touch screen arranged in the vehicle may be used.

Optionally, the control system is adapted to hold a constant gear while the user input element is maintained in an actuated position.
A technical benefit may include improved safety and controllability of the gear control system.

Optionally, the control system is adapted such that holding a constant gear is allowed up to a predetermined vehicle speed.
A technical benefit may include improved safety of the gear control system.

According to a second aspect of the disclosure, there is provided a transmission arrangement for an electrically driven vehicle, comprising a transmission having at least two gears and a control system according to any one of the preceding claims.
The second aspect of the disclosure may seek to improve drivability and alleviate driver discomfort due to unwanted gear shifts.

According to a third aspect of the disclosure, there is provided a powertrain for an electrically driven vehicle, comprising at least one electric motor and the transmission arrangement according to the second aspect.
Advantages and advantageous features of the powertrain according to the third aspect are largely analogous to advantages and advantageous features of the control system according to the first aspect.

Optionally, the travelling direction of the vehicle is changed from rearward to forward or vice versa by changing a rotation direction of the at least one electric motor. Thereby, a gear shift during a change of the travelling direction may be rendered unnecessary, i.e. the same gear can be used for forward and reverse driving.

According to a fourth aspect of the disclosure, there is provided a vehicle comprising the control system according to the first aspect, the transmission arrangement according to the second aspect, or the powertrain according to the third aspect.
Advantages and advantageous features of the vehicle according to the fourth aspect are largely analogous to advantages and advantageous features of the control system according to the first aspect, the transmission arrangement according to the second aspect, and the powertrain according to the third aspect, respectively.

According to a fifth aspect, there is provided a method for gear selection of a transmission for an electrically driven vehicle, the vehicle comprising a gear selection control device and a gear selection input device, the gear selection input device comprising a user input element for selectively holding a constant gear, wherein the method comprises:
holding a constant gear of the transmission, in response to an activation of the user input element.
Advantages and advantageous features of the method according to the fifth aspect are largely analogous to advantages and advantageous features of the control system according to the first aspect.

Optionally, holding a constant gear comprises inhibiting an automatic gear ratio shift by overriding a command for an automatic gear ratio shift from the gear selection control device.

Optionally, holding a constant gear comprises inhibiting a command for an automatic gear ratio shift issued by the gear selection control device, wherein said command is issued in dependence of one or more of: a longitudinal inclination of the vehicle , a mass of the vehicle , a power limit of the vehicle or any combination thereof.

Optionally, holding a constant gear comprises inhibiting a command for an automatic gear ratio shift issued by the gear selection control device, wherein said command is issued in response to a travelling direction change of the vehicle from rearward to forward or vice versa.

Optionally, the user input element is one of a push button, a lever or a touch screen.

Optionally, holding a constant gear comprises
- holding a constant gear while the user input element is maintained in an actuated position.

Optionally, the method further comprises abandoning holding a constant gear when the vehicle reaches a predetermined vehicle speed.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a schematic side view of a vehicle according to an example.
**FIG. 2** schematically shows a control system and a powertrain according to examples.
**FIG. 3** is a flow chart illustrating a method according to an example.
**FIG. 4** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

An aim of the present disclosure is to alleviate at least one drawback of the prior art, or at least to provide a suitable alternative. In particular, an aim of the present disclosure is to provide a control system and a method for improved drivability and driving comfort when changing a driving direction of a vehicle from forward to reverse or vice versa on an inclined road section, such as a slope. In an electric vehicle gear shifts are not necessary for a direction change, because the direction change can be actuated by changing the rotation direction of the electric motor(s) instead of having a dedicated reverse gear. However, automatic gear control systems may issue commands for gear shifts to higher or lower gear ratios based on e.g. an inclination of the vehicle. The present disclosure is based on the insight that gear ratio shifts when changing the driving direction from forward to reverse or vice versa may be experienced as disturbing for an operator and lead to unnecessary power cut-offs.

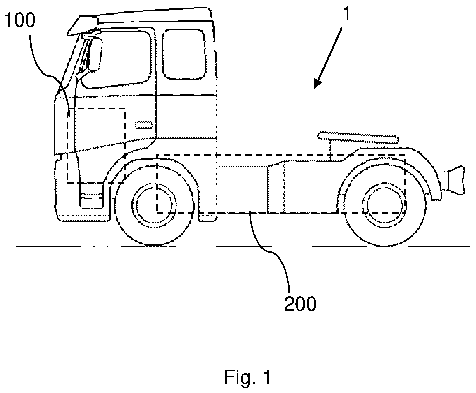

**FIG. 1** schematically depicts a vehicle 1 in the form of a heavy-duty towing truck. The vehicle **1** comprises a control system **100** for gear selection of a transmission (not shown) and a powertrain **200** with at least one electric machine (not shown) in the form of a motor/generator.

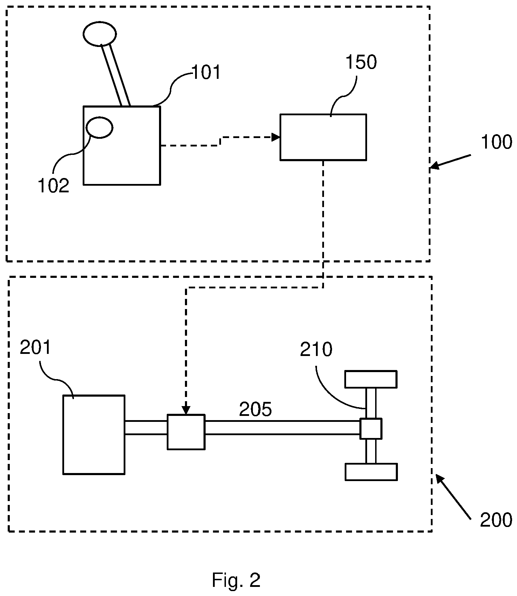

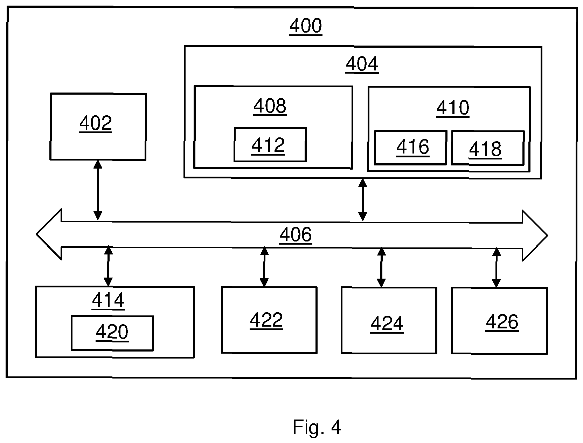

**FIG. 2** shows a powertrain **200** and a control system **100** for gear selection of a transmission **205** according to examples of the present disclosure. The transmission **205** is connected to at least one electric machine **201** and at least one drive axle **210.** The transmission **205** has at least two gears (not shown) with different gear ratios. The transmission may be any conventional arrangement of gearings for achieving suitable gear ratios for the vehicle **1.** The transmission may comprise one or more planetary gears. A forward and a reverse driving direction may both be effectuated with one or more of the gears of the transmission **205,** i.e. by rotating the at least one electric machine **201** in a forward or a reverse direction, respectively. In other words, the transmission **205** may not comprise a dedicated reverse gear. The transmission is controlled by a gear selection control device **150.** The gear selection control device **150** may be part of a computer system **400** of the vehicle and may comprise processing circuitry **402,** see Fig. 4. Further the control system **100** for gear selection may comprise a gear selection input device **101.** The gear selection input device **101** may be a conventional gear selection input device for automatic gear control systems. The gear selection input device **101** may comprise one or more levers or push buttons. The gear selection input device **101** may be arranged in a mid-console next to an operator seat. Alternatively, the gear selection input device **101** may be integrated in a steering wheel of the vehicle **1.** Of course, other positions for the gear selection input device **101** are possible and apparent to the person skilled in the art.

Further, the control system **100** for gear selection may comprise a user input element **102** for holding a constant gear. The user input element **102** may be integrated in the gear selection input device **101** and may be arranged in the form of a push button, a slide button, a lever or the like. Alternatively, the user input element **102** may be integrated in a touch screen. Still alternatively, the user input element **102** may be arranged on a steering wheel of the vehicle **1.** Other ways of designing the user input element **102** are conceivable and may comprise voice control, or control by gestures. Of course, safety concerns have to be considered carefully when designing the user input element **102.**

The gear selection control device **150** is adapted to hold a constant gear of the transmission while the user input element **102** is activated. Thus, the control system **100** for gear selection allows an operator to hold a current gear even in cases when the gear selection control device **150** would otherwise automatically cause the transmission **205** to shift to another gear. In other words, activation of the user input element **102** may inhibit a gear shift by overriding a command for an automatic gear shift issued by the gear selection control device **150.** As already mentioned, an automatic gear shift which is not wanted by the operator may occur when a travelling direction of the vehicle **1** is changed and when the vehicle **1** is inclined, e.g. when the vehicle **1** is situated on a slope. However, other situations are also conceivable. For example, the operator may wish to inhibit a gear ratio shift when driving on a downhill followed by an uphill slope. While the vehicle **1** is on the downhill the gear selection control device **150** may issue a command for a gear shift to a higher gear ratio, which is not desired by the operator, because the operator foresees the upcoming uphill section which demands a gear shift back to a lower gear ratio.

The gear selection control device **150** may be configured to select a gear and control gear shifts by issuing commands to the transmission **205.** The commands for automatic gear ratio shifts may be issued by the gear selection control device **150** in dependence of one or more of: a longitudinal inclination of the vehicle **1,** a mass of the vehicle **1,** a power limit of the vehicle **1** or any combination thereof. Further, the gear ratio and gear ratio shifts may be determined based on a desired acceleration of the vehicle **1.** Thus, a different gear ratio may determined as appropriate when the vehicle **1** is on an uphill road section as compared to the vehicle being on a downhill road section. Hence, when the travelling direction is changed from forward to reverse or vice versa, a gear ratio shift may be determined that is not desired by the operator. By activating the user input element **102** the gear ratio shift may be inhibited by the operator. Thus, the operator is provided with improved control of the transmission, which improves drivability of the vehicle and avoids unnecessary power cut-offs.

In an example, the gear is held constant, i.e. any gear shift is inhibited, while the user input element **102** is held in an actuated position by the operator. The user input element **102** may be such that it is in an actuated position only while it is actively pushed by an operator. For example, the user input element **102** may be biased to an unactuated position by a spring or the like. Hence, unintended activation of the inhibiting function may be avoided. Further, the activation of the inhibiting function may be limited to speeds below a predetermined vehicle speed. The predetermined speed may be 5 km/h or 10 km/h. Hence, an unintended inhibiting of gear ratio shifts at higher speeds may be avoided.

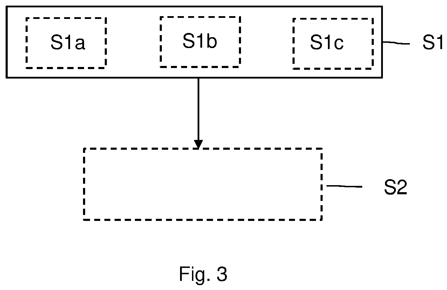

A method for gear selection of a transmission **205** in an electric vehicle **1,** such as the vehicle **1** illustrated in **FIG. 1** comprising the powertrain **200** and the control system **100** for gear selection illustrated in **FIG. 2****,** is illustrated in **FIG. 3****.** The method comprises the actions illustrated in **FIG. 3****,** wherein optional actions are illustrated with dashed lines.

**Action S1:** holding a constant gear of the transmission **205,** in response to an activation of the user input element **102.**
As mentioned before, the gear is held constant, i.e. any automatic gear shift is inhibited, when the user input element **102** is activated. Thereby, the operator gains improved control over the vehicle and unnecessary power cut-offs are avoided.

The action of holding **S1** a constant gear may comprise an action of inhibiting **S1a** an automatic gear ratio shift by overriding a command for an automatic gear ratio shift from the gear selection control device **150.** Optionally, said command for an automatic gear shift may be issued in dependence of one or more of: a longitudinal inclination of the vehicle **1,** a mass of the vehicle **1** a power limit of the vehicle **1** or any combination thereof.

The action of holding **S1** a constant gear may comprise an action of inhibiting **S1b** a command for an automatic gear ratio shift issued by the gear selection control device **150,** wherein said command is issued in response to a travelling direction change of the vehicle **1** from rearward to forward or vice versa.
The gear control device **150** may be configured to issue a command for an automatic gear shift in response to a direction change while the vehicle is inclined. The command may be based on a longitudinal inclination of the vehicle **1.** The action of holding **S1** a constant gear in response to an activation of the user input element **102** may be dependent on a direction change. In a non-limiting example, only gear shifts in connection with direction changes may be inhibited.

The action of holding **S1** a constant gear may further comprise an action of holding **S1c** a constant gear while the user input element **102** is maintained in an actuated position.
Thus, the action **S1** of holding a constant gear is only executed when an operator actively actuates the user input element **102.** As mentioned before, the user input element **102** may be biased to an unactuated position, such that it must be held actively in an actuated position. Thus, it may be ensured that the operator still intends to hold a constant gear, which increases the safety of the control system **100.**

**Action S2:** abandoning **S2** holding a constant gear when the vehicle reaches a predetermined vehicle speed.
The action of holding a constant gear **S2** may be abandoned when the vehicle reaches a predetermined vehicle speed, e.g. 5 km/h or 10 km/h, even when the operator still actuates the user input element **102.** Thereby, it is ensured that the action of holding **S1** a constant gear is not performed in unintended driving situations. Thus, the safety of the control system **100** is increased.

The method according to the present disclosure may be performed by processing circuitry **402** of a computer system **400,** such as the gear selection control device 150. In that case the processing circuitry **402** may be configured to send control signals to the transmission 205 for controlling the gear ratio of the transmission **205.** The transmission **205** may in that case comprise processing capabilities for receiving control signals and actuators for performing the gear shifts. In other words, the actions **S1, S1a, S1b, S1c** and **S2** of the method according to the present disclosure may be performed by the processing circuitry **402** being configured to control the transmission **205.**

**FIG. 4** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units, such as the control unit 150 illustrated in FIG. 2), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device
interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

In the following, possible features and feature combinations of the present disclosure are presented as a list of numbered Examples.
Example 1: A control system (100) for gear selection of a transmission (205) for an electrically driven vehicle (1), wherein said control system (100) comprises a gear selection control device (150) and a gear selection input device (101), the gear selection input device (101) comprising a user input element (102) for selectively holding a constant gear, and wherein said control system (100) is adapted to hold a constant gear of the transmission while the user input element (102) is activated.
Example 2: The control system (100) of example 1, wherein holding a constant gear comprises inhibiting an automatic gear ratio shift by overriding a command for an automatic gear ratio shift from the gear selection control device (150).
Example 3: The control system (100) of example 2, wherein said command for an automatic gear ratio shift is issued by the gear selection control device (150) in dependence of one or more of: a longitudinal inclination of the vehicle (1), a mass of the vehicle (1), a power limit of the vehicle (1) or any combination thereof.
Example 4: The control system (100) of any of examples 2-3, wherein said command for an automatic gear shift is issued in response to a travelling direction change of the vehicle (1) from rearward to forward or vice versa.
Example 5: The control system (100) of any of examples 1-4, wherein the user input element (102) is one of a push button, a lever or a touch screen.
Example 6: The control system (100) of any of examples 1-5, wherein the control system (100) is adapted to hold a constant gear while the user input element is maintained in an actuated position.
Example 7: The control system (100) of any of examples 1-6, wherein the control system is adapted such that holding a constant gear is allowed up to a predetermined vehicle speed.
Example 8: A transmission arrangement for an electrically driven vehicle (1), comprising a transmission (205) having at least two gears and a control system (100) according to any one of the preceding examples.
Example 9: A powertrain (200) for an electrically driven vehicle (1), comprising at least one electric motor (201) and the transmission arrangement according to example 8.
Example 10: The powertrain (200) according to example 10, wherein the travelling direction of the vehicle is changed from rearward to forward or vice versa by changing a rotation direction of the at least one electric motor (201).
Example 11: A vehicle (1) comprising the control system (100) according to any of examples 1-7, the transmission arrangement according to example 8, or the powertrain (200) according to any of examples 9-10.
Example 12: A method for gear selection of a transmission (205) for an electrically driven vehicle (1), the vehicle comprising a gear selection control device (150) and a gear selection input device (101), the gear selection input device (101) comprising a user input element (102) for selectively holding a constant gear, wherein the method comprises:
   holding (S 1) a constant gear of the transmission (205), in response to an activation of the user input element (102).
Example 13: The method of example 12, wherein holding (S1) a constant gear comprises inhibiting (S1a) an automatic gear ratio shift by overriding a command for an automatic gear ratio shift from the gear selection control device (150).
Example 14: The method of example 13, wherein holding (S1) a constant gear comprises inhibiting a command for an automatic gear ratio shift issued by the gear selection control device (150), wherein said command is issued in dependence of one or more of: a longitudinal inclination of the vehicle (1), a mass of the vehicle (1), a power limit of the vehicle (1) or any combination thereof.
Example 15: The method of examples 13-14, wherein holding (S1) a constant gear comprises inhibiting (S1b) a command for an automatic gear ratio shift issued by the gear selection control device (150), wherein said command is issued in response to a travelling direction change of the vehicle (1) from rearward to forward or vice versa.
Example 16: The method of any of examples 12-15, wherein the user input element (102) is one of a push button, a lever or a touch screen.
Example 17: The method of any of examples 12-16, wherein holding (S1) a constant gear comprises
   - holding (S1c) a constant gear while the user input element (102) is maintained in an actuated position.
Example 18: The method of any of examples 12-17, further comprising abandoning (S2) holding a constant gear when the vehicle reaches a predetermined vehicle speed.
Example 19: A computer program product comprising program code for performing, when executed by processing circuitry (402), the method of any of examples 12-18.
Example 20: A non-transitory computer-readable storage medium comprising instructions, which when executed by processing circuitry (402), cause the processing circuitry (402) to perform the method of any of claims 12-18.

## Claims

1. A control system (100) for gear selection of a transmission (205) for an electrically driven vehicle (1), wherein said control system (100) comprises a gear selection control device (150) and a gear selection input device (101), the gear selection input device (101) comprising a user input element (102) for selectively holding a constant gear, and
wherein said control system (100) is adapted to hold a constant gear of the transmission while the user input element (102) is activated.

2. The control system (100) of claim 1, wherein holding a constant gear comprises inhibiting an automatic gear ratio shift by overriding a command for an automatic gear ratio shift from the gear selection control device (150).

3. The control system (100) of claim 2, wherein said command for an automatic gear ratio shift is issued by the gear selection control device (150) in dependence of one or more of: a longitudinal inclination of the vehicle (1), a mass of the vehicle (1), a power limit of the vehicle (1) or any combination thereof.

4. The control system (100) of any of claims 2-3, wherein said command for an automatic gear ratio shift is issued in response to a travelling direction change of the vehicle (1) from rearward to forward or vice versa.

5. The control system (100) of any of claims 1-4, wherein the user input element (102) is one of a push button, a lever or a touch screen.

6. The control system (100) of any of claims 1-5, wherein the control system (100) is adapted to hold a constant gear while the user input element is maintained in an actuated position.

7. The control system (100) of any of claims 1-6, wherein the control system is adapted such that holding a constant gear is allowed up to a predetermined vehicle speed.

8. A transmission arrangement for an electrically driven vehicle (1), comprising a transmission (205) having at least two gears and a control system (100) according to any one of the preceding claims.

9. A powertrain (200) for an electrically driven vehicle (1), comprising at least one electric motor (201) and the transmission arrangement according to claim 8, wherein the travelling direction of the vehicle is changed from rearward to forward or vice versa by changing a rotation direction of the at least one electric motor (201).

10. A vehicle (1) comprising the control system (100) according to any of claims 1-7, the transmission arrangement according to claim 8, or the powertrain (200) according to claim 9.

11. A method for gear selection of a transmission (205) for an electrically driven vehicle (1), the vehicle comprising a gear selection control device (150) and a gear selection input device (101), the gear selection input device (101) comprising a user input element (102) for selectively holding a constant gear, wherein the method comprises:
holding (S1) a constant gear of the transmission (205), in response to an activation of the user input element (102).

12. The method of claim 11, wherein holding (S1) a constant gear comprises inhibiting (S1a) an automatic gear ratio shift by overriding a command for an automatic gear ratio shift from the gear selection control device (150).

13. The method of claims 11-12, wherein holding (S1) a constant gear comprises inhibiting (S1b) a command for an automatic gear ratio shift issued by the gear selection control device (150), wherein said command is issued in response to a travelling direction change of the vehicle (1) from rearward to forward or vice versa.

14. The method of any of claims 11-13, wherein holding (S 1) a constant gear comprises
- holding (S1c) a constant gear while the user input element (102) is maintained in an actuated position.

15. The method of any of claims 11-14, further comprising abandoning (S2) holding a constant gear when the vehicle reaches a predetermined vehicle speed.
